Europäisches Patentamt

**European Patent Office**

**Office européen des brevets**

(19)

(11) Publication number: **0 212 909**
A2

# (12) EUROPEAN PATENT APPLICATION

(21) Application number: **86306050.5**

(22) Date of filing: **06.08.86**

(51) Int. Cl.⁴: **B 65 G 11/00,** B 65 G 11/18, E 06 C 7/14

(30) Priority: **10.08.85 GB 8520119**

(43) Date of publication of application: **04.03.87**
**Bulletin 87/10**

(84) Designated Contracting States: **AT BE CH DE FR GB IT LI NL SE**

(71) Applicant: **DEVITEC LIMITED, Oak Walk, St. Peter Jersey Channel Isles (GB)**

(72) Inventor: **Arnold, Paul Ernest Victor, 64 Elders road, West Ealing London, W13 9QD (GB)**

(74) Representative: **Corin, Christopher John et al, Mathisen Macara & Co. The Coach House 6-8 Swakeleys Road, Ickenham Uxbridge UB10 8BZ (GB)**

(54) **Rubbish Chute.**

(57) A chute assembly for mounting on a ladder comprises a plurality of channel section member (10), which, when assembled together, form an elongate channel chute and when stacked or nested can be readily transported, each member including means by which it can be attached to a conventional ladder. In a preferred embodiment the attachment means also serve to reinforce the corresponding member (10).

ACTORUM AG

This invention relates to chutes primarily intended for conveying rubbish under gravity forces but which can also be used for gravity conveyance of other material provided that the material is sufficiently robust.

Of recent years the demand for better environmental conditions both as to dust, dirt and noise has led to the use of chutes of a basically demountable and portable nature for use on building sites. Such chutes have, hitherto, in practice comprised a plurality of slightly tapering, frusto conical hollow sections with one narrower end portion of each section inserted into the wider end portion of the next section below. Appropriate support means in the form of a chain or cable are provided and since the overall weight of the chute may be quite substantial, it is necessary at the upper end to provide adequate support structure.

Such chutes serve to prevent the spread of dust as building rubbish is removed from an elevated location on a building structure and, at the lower end, the impact noise of breaking tiles, glass and bricks is to some extent muffled. Such, basically tubular chutes

0212909

are however, quite bulky, costly and because of the highly abrasive nature of most of the material passed down them their life is short.

Despite this short life the components are quite costly as they are generally made of a high grade, abrasion resistant plastics. In addition to the cost aspect they are fundamentally not well suited to small building firms working on domestic dwellings.

It is therefore a general objective of the present invention to provide a demountable chute for the conveyance of rubbish or other material on a building site, the chute as manufactured being of comparatively low cost and readily transportable in a small van or other small vehicle.

According to the present invention there is provided a chute comprising a plurality of channel section members which when assembled together form an elongate channel chute and when stacked or nested can readily be transported. Such a chute will normally be supported on a standard ladder.

Preferably each section has at at least one end a reinforcing member which conforms to two of the sides of the section, a third intermediate side extending beyond the overall cross-section of the section and projecting so that it can engage the rung of a ladder.

A rubbish chute embodying the invention will now be described, by way of example only, with reference to the accompanying diagrammatic drawings, in which:

Figure 1 is a perspective view of one section of a chute embodying the present invention;

Figure 2 is a side elevation showing two adjacent sections of the chute engaged on a ladder;

Figure 3 is a side elevation of a complete chute mounted on a ladder and ready for use;

Figure 4 is a perspective view showing the uppermost end portion of a chute as shown in Figures 1 to 3;

Figure 5 is a side elevation illustrating the mounting of a ladder on the edge of a skip; and

Figure 6 shows a modification of the embodiment of Figures 1 to 5; and

Figure 7 shows one section of an alternative form of chute.

Referring now to the drawings, each chute comprises a plurality of sections 10 of generally channel section and thus including a base 12 and two side limbs or wings 14. For simplicity of manufacture the cross-section of each section is constant, the limbs 14 being inclined outwardly to enable nesting in the demounted condition and engagement of one end portion in an end portion of the next adjacent chute without any difficulty. The constant cross-section substantially simplifies production costs and consequent final selling price.

Each section includes tabs or hooks 13 by which the section can be engaged over a rung 15 of a conventional ladder 16. For convenience each section has an overall length slightly greater than the spacing between two rungs 15 of a standard ladder. However, sections of greater length can also be employed.

The material of the chute sections is preferably an abrasion resistant plastics material although the tabs or hooks 13 will be made of metal. The latter can conveniently be secured to the base of the corresponding section by rivets (not shown).

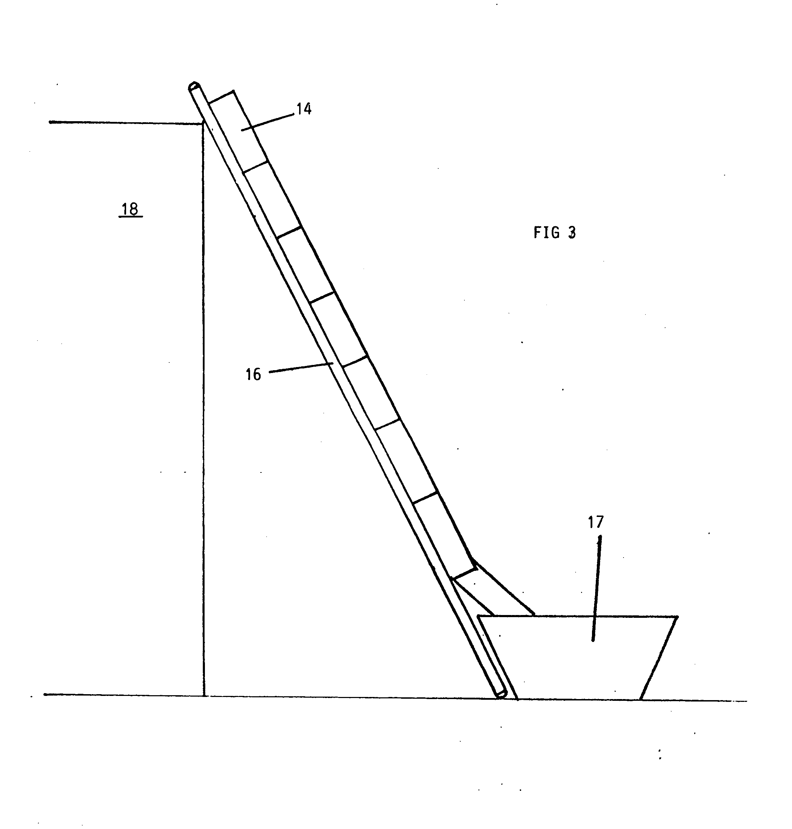

As will be apparent from Figure 3 the complete chute is supported on the ladder 16 with the lowermost section inclined at a different angle to that of the ladder to enable rubbish or other material delivered by the chute to be directed immediately into a skip 17. Although a building 18 of comparatively low height has been illustrated purely diagrammatically, it will be understood that substantially longer chutes can be built up from a larger number of sections, the limiting factor being the strength of the stiles of the ladder 16. The forces acting on each section are the self-weight and the frictional force and weight of the material being delivered down the chute and hence the individual loading on the hooks or tabs and on the rungs of the ladder is not high. However, cumulatively the loading must not exceed the safe load for the ladder in use.

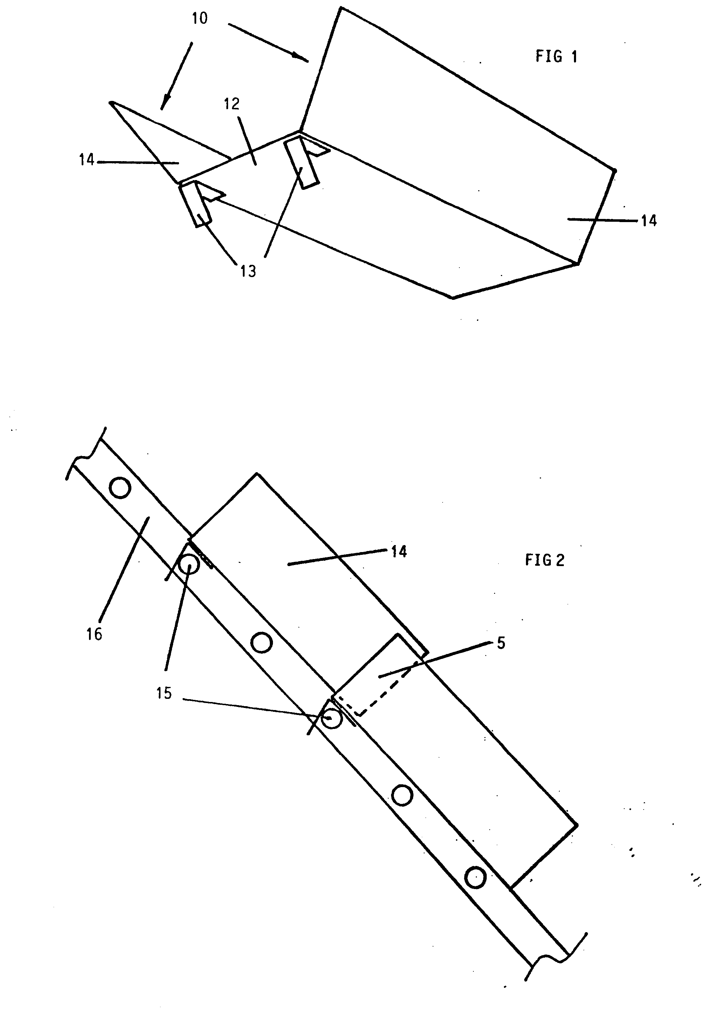

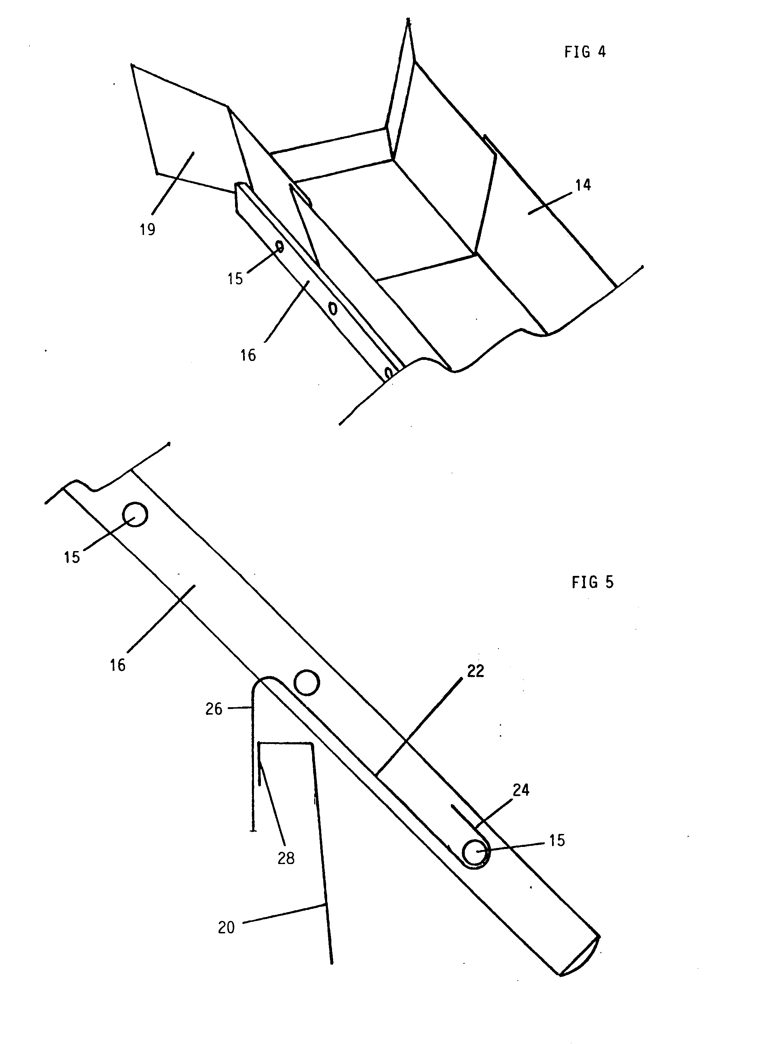

Figure 4 illustrates an upper portion of a chute and includes a special section 11 of which the side wings 19 splay outwardly to facilitate loading by acting as a hopper. Otherwise, as will be apparent from Figure 4 the construction corresponds substantially to that of the sections of Figures 1 to 3.

Figure 5 illustrates a simple and convenient way by which the lower end portion of the ladder 16 can be supported on the edge of a skip 20 or other final receptacle for the rubbish or other material. The support is provided by a bracket 22 one end portion 24 of which engages over one rung 15 of the ladder, the other end portion 26 engaging over an upper edge portion 28 of the skip.

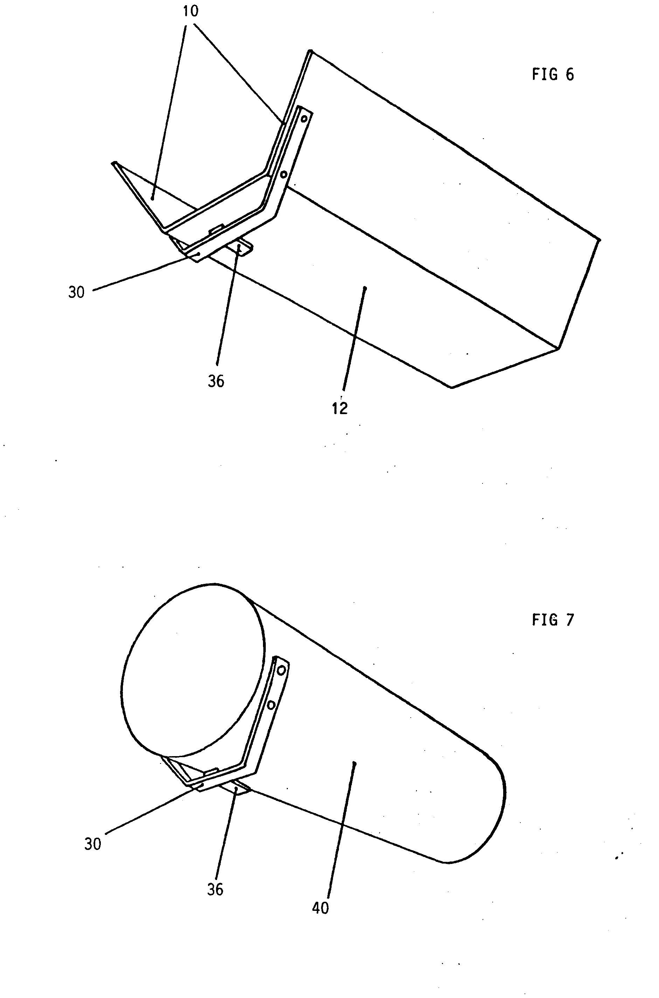

By using appropriate plastics material the sections can be sufficiently rigid without reinforcement, but greater strength and therefore reduced thickness of relatively expensive plastics material can be achieved by fitting a metal member 30 by riveting at or adjacent one end of each section as illustrated in Figure 6. The member 30 has a base 32 and two side members 34 which have inclinations relative to the base which are matched to the inclination of the side limbs 14 of each section 10. Parts of the side limbs of the channels are secured by riveting to parts of the reinforcing members, the base and other parts of the reinforcing members extending away from the channel section and thus forming an alternative to the tabs of Figure 1 with the added advantage of simplicity and ease of transference of load and, depending upon the number of rivets used for securing to the corresponding section, stress concentrations are reduced or avoided. For added security the metal strip member 30 way incorporate a tab 36 welded to the portion thereof extending parallel to the base of the channel member. The tab extends at right angles to the length of the strip and in use will engage beneath a rung of the ladder.

If desired a flexible cover may be mounted on the chute and ladder thus reducing the amount of dust generated when in use.

The alternative of Figure 7, is basically one section of a chute, each section 40 being of frusto-conical from as is conventional in chutes of the kind in question. However, in contrast this section includes the same reinforcing metal member as the modification of Figure 6, once again a tab 36 welded to the member 30 providing additional security.

Chutes in accordance with the present invention can, when nested, be made to occupy a very small volume and owing to the modest weight of each section they can be installed on a ladder manually without the need for winches or hoists.     It follows that a small building firm  with limited manpower resources can readily make use  of a chute as hereinbefore described without  the use  of  any additional equipment  beyond  a  standard ladder.

The  use  of  a ladder to  provide  the  main  support coupled  with  the rectilinear line which  it  defines produces  no  bends in the chute  itself,  such  bends otherwise  tending  in  conventional  generally cylindrical chutes to result in excessive wear at  the bends  and  hence  a comparatively short life  in  the arduous  conditions  encountered  in  the  building industry.

It  will  be apparent from the  foregoing  description that  in  its  broadest  terms  a  chute assembly  is disclosed  which includes a plurality of members which can  be nested one within the other and each of  which includes reinforcement means which also serve as means for engaging the corresponding section of the chute on the rungs or another convenient part of a conventional ladder.

0212909

## CLAIMS

1.    A chute assembly for mounting on a ladder characterized by a plurality of channel section members (10) which, when assembled together form an elongate channel chute and when stacked or nested can readily be transported, each member including means (13) by which it can be attached to a conventional ladder.

2.    An assembly according to claim 1 characterized in that each section comprises a base and two opposed limbs each limb being inclined to the base at an angle such that one section can be nested within another.

3.    An assembly according to claim 1 characterized in that the attachment means comprise hooked members (13).

4.    An assembly according to any one of claims 1 to 3 characterized in that each channel section member (10) is of constant cross-section.

5.    An assembly according to any one of the claims 1 to 3 characterized in that wherein the attachment means (30) also serve as reinforcements to maintain the limbs or sides of the channel section member at a given angular relationship with the base.

6.    An assembly according to any one of the claims 1 to 5 characterized in that the channel section members are made of an abrasion resistant plastics material.

7.    An assembly according to claim 5, characterized in that the attachment and reinforcement means comprises a metal strip bent to conform generally to the cross-section of the channel section members, a portion thereof lying parallel to the base of the channel section member to which it is secured, but spaced from that base.

8.    An assembly according to claim 7 characterized in that the said portion of the metal strip has a security tab welded thereto and extending at right angles to the length of the strip.

9.    A chute assembly for mounting on a ladder comprises a plurality of frusto-conical members (40) dimensioned so that a narrower end portion of one member can fit in a wider end portion of a next adjacent member, characterized in that each member incorporates means (30) by which it can be attached to and supported by a ladder.

10.    An  assembly according to claim 9 characterized in  that  the attachment means  (30)  comprises  metal strips  bent to form a channel shaped member a portion of  which extends beyond the frusto-conical member  so that the said portion can engage the rung of a ladder.

0212909

FIG 1

FIG 2

0212909

14

18

FIG 3

16

17

0212909

FIG 4

FIG 5

0212909

FIG 6

10

30

36

12

FIG 7

30

36

40